# EUROPEAN PATENT APPLICATION

(11) **EP 3 285 482 A1**
(43) Date of publication of application: **21.02.2018**
(21) Application number: 16893261.4
(22) Date of filing: 18.09.2016
(51) Int. Cl.: H04N 5/63, H04N 5/64

(54) **TELEVISION MAINBOARD DEVICE AND TELEVISION SYSTEM**

(30) Priority: 07.03.2016 CN 201610128661
(71) Applicant: Heyi Intelligent Technology (Shenzhen) Co., Ltd., Beijing 100029 (CN)
(72) Inventor: REN, Tingming, Dongcheng District, Beijing 100029 (CN); GAO, Bo, Dongcheng District, Beijing 100029 (CN); AN, Shenhua, Dongcheng District, Beijing 100029 (CN); SU, Wenhua, Dongcheng District, Beijing 100029 (CN); YAO, Jian, Dongcheng District, Beijing 100029 (CN); PAN, Baiyu, Dongcheng District, Beijing 100029 (CN); WANG, Ji, Dongcheng District, Beijing 100029 (CN)
(74) Representative: Herzog, Markus
(86) International application number: PCT/CN2016/099185
(87) International publication number: WO 2017/152616

(57) **Abstract**

The present disclosure relates to a TV main board apparatus and a TV system. The TV main board apparatus includes a casing having at least one opening; a TV main board accommodated in the casing; a first interface exposed outside the casing via the opening, wherein the first interface is connectable to a power supply so as to receive first electric power; a second interface exposed outside the casing via the opening, wherein the second interface is connectable to a TV so as to transmit a multimedia signal from the TV main board and the first electric power to the TV and receive second electric power from the TV so as to supply it to the TV main board; and an interface connecting device that connects the first interface to the second interface so as to transmit the first electric power therebetween.

## Description

### CROSS-REFERENCE TO RELATED APPLICATION

This application claims priority to Chinese Patent Application No. 201610128661.1, filed on March 7, 2016, the entire contents of which are incorporated herein by reference.

### TECHNICAL FIELD

The present disclosure relates to the field of audio-visual equipment, and in particular, to a TV main board apparatus and a TV system.

### RELATED ART

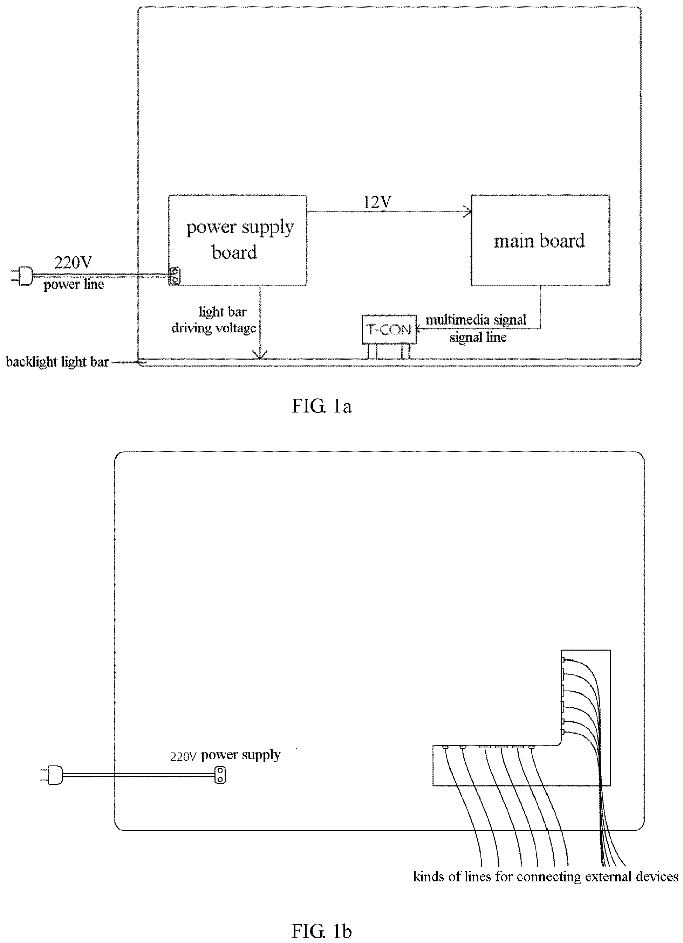

In a conventional TV, the main board is generally integrated in the TV's rear casing. Fig. 1a is a schematic diagram illustrating the connection between a TV main board and the other related components in the TV in prior art. In Fig. 1a, the TV main board is integrated in the TV's rear casing. Electric power of 220V is input into the power supply board inside the TV via the power cord. The power supply board converts one part of the electric power into DC power of 12V for powering the TV main board, and converts the other part into a light bar driving voltage for providing to the backlight light bar so as to lighten the screen. The TV main board outputs the processed multimedia signals to the subsequent components such as the time sequence controller (T-CON), which controls display on the screen body.

Fig. 1b is a rear view of a prior art TV where a TV main board is integrated.

As is evident from the above, in prior art, the TV main board is integrated in the TV's rear casing. Since there are many external ports on the main board, the TV's rear casing has to allow many leading-out wires that connect to external devices (see Fig. 1b for instance),which negatively influences the appearance, and makes it hard to place and install the external devices in a convenient way. In addition, a TV main board of this kind cannot be detached and replaced with ease, so an entire TV may have to be replaced once its main board is destroyed or needs to be upgraded.

In the prior art, there is an approach to the above problem: placing the TV main board outside the TV casing as an independent apparatus. But the approach makes it necessary to provide both the TV and the main board with a respective power supply line and provide a line to connect the TV to the main board. The complicated wiring leads to still inconvenient use and installation, and complicated and unsightly appearance.

### SUMMARY

In order to solve the above problems in the prior art, the present disclosure provides a TV main board apparatus and a TV system, which can be used and installed with more ease.

According to one aspect of the present disclosure, there is provided a TV main board apparatus, which comprises: a casing having at least one opening; a TV main board accommodated in the casing; a first interface exposed outside the casing via the opening, wherein the first interface is capable of connecting to a power supply so as to receive first electric power; a second interface exposed outside the casing via the opening, wherein the second interface is capable of connecting to a TV so as to transmit a multimedia signal from the TV main board and the first electric power to the TV and receive second electric power from the TV so as to supply the second electric power to the TV main board; and an interface connecting device configured to connect the first interface to the second interface so as to transmit the first electric power therebetween.

According to another aspect of the present disclosure, there is provided a TV system, which comprises the above TV main board apparatus, a connection apparatus, and a TV, wherein the connection apparatus connects the TV main board apparatus to the TV.

In each of the aspects of the present disclosure, the TV main board as an independent apparatus is separated from the TV, so the TV does not need to have a large number of leading-out wires, and the TV main board can be repaired and replaced with ease. Besides, in each of the aspects of the present disclosure, it is unnecessary to provide the TV and the main board with independent power supply lines. Instead, only connecting the first interface of the TV main board to a power supply and connecting the second interface to the TV make it possible to supply electric power to both the TV main board apparatus and the TV and transmit a signal therebetween. As a result, the whole system becomes less complicated, easier to use and install, and simple and attractive in appearance.

Additional features and aspects of the present disclosure will become apparent from the following description of exemplary examples with reference to the attached drawings.

### BRIEF DESCRIPTION OF THE DRAWINGS

The drawings, which are incorporated in and constitute part of the specification, together with the description, illustrate exemplary examples, features and aspects of the present disclosure and serve to explain the principles of the present disclosure.
Fig. 1a is a schematic diagram illustrating the connection between the main board and the other related components in the TV in a prior art.
Fig. 1b is a back view of a prior art TV that is integrated with a TV main board.
Fig. 2 is a schematic structural diagram showing a TV main board apparatus according to an example of the present disclosure.
Figs. 3a-3d are schematic structural diagrams showing examples of a second interface.
Figs. 4, 5a and 5b are schematic structural diagrams showing examples of an interface connecting device.
Figs. 6a and 6b are schematic structural diagrams of an exemplary insulating covering device.
Fig. 7 is a schematic structural diagram showing a TV system according to an example of the present disclosure.
Fig. 8 is a schematic structural diagram showing an exemplary connection apparatus.
Fig. 9 is a schematic structural diagram showing the cross section of an exemplary connection line.
Fig. 10 is a schematic structural diagram showing an exemplary TV.

### DETAILED DESCRIPTION

Various exemplary examples, features and aspects of the present disclosure will be described in detail with reference to the drawings. The same reference numerals in the drawings represent parts having the same or similar functions. Although various aspects of the examples are shown in the drawings, it is unnecessary to proportionally draw the drawings unless otherwise specified.

Herein the term "exemplary" means "used as an instance or example, or explanatory". An "exemplary" example given here is not necessarily construed as being superior to or better than other examples.

Numerous details are given in the following examples for the purpose of better explaining the present disclosure. It should be understood by a person skilled in the art that the present disclosure can still be realized even without some of those details. In some of the examples, methods, means, units and circuits that are well known to a person skilled in the art are not described in detail so that the principle of the present disclosure become apparent.

### Example 1

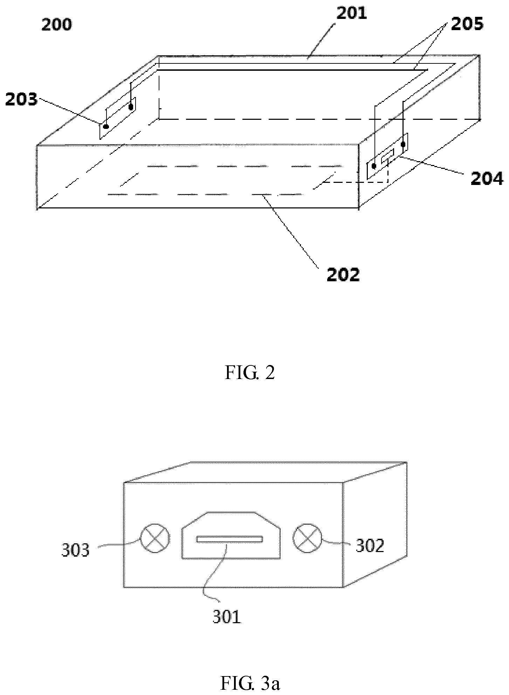

Fig. 2 is a schematic structural diagram showing a TV main board apparatus 200 according to an example of the present disclosure. As shown in Fig. 2, the TV main board apparatus 200 comprises a casing 201 having at least one opening. The TV main board apparatus 200 further comprises a TV main board 202 accommodated in the casing 201. The TV main board apparatus further comprises a first interface 203, a second interface 204, and an interface connecting device 205. The first interface 203 and the second interface 204 are exposed outside the casing 201 via their respective openings. The first interface 203 is capable of connecting to a power supply so as to receive first electric power. The second interface 204 is capable of connecting to a TV so as to transmit a multimedia signal from the TV main board and the first electric power to the TV and receive second electric power from the TV so as to supply it to the TV main board. The interface connecting device 205 connects the first interface 203 to the second interface 204 so as to transmit the first electric power therebetween.

This example separates a TV main board as an independent apparatus from a TV, so the TV does not need to have a large number of leading-out wires, and the TV main board can be repaired and replaced with ease. In this example, it is unnecessary to provide the TV and the main board with separate power supply lines. Instead, the TV main board apparatus is capable of supplying the first electric power to the TV via the second interface so as to supply electric power to the TV and receiving the second electric power from the TV via the second interface so as to supply electric power to itself. That way, only connecting the first interface to a power supply and connecting the second interface to the TV make it possible to supply electric power to both the TV main board apparatus and the TV and transmit a signal therebetween. As a result, the whole system becomes less complicated, easier to use and install, and simple and attractive in appearance.

As an example of the casing, the casing 201 may be in any desired shape such as a cuboid or a cube. The present disclosure is not intended to place any restrictions on the shape of the casing. The opening primarily serves to expose an interface (e.g., a power supply interface, an audio/video interface, a cable television interface, or a USB interface) that is within the casing outside the casing, and accommodate various components such as press keys, a remote-control signal receiver, and a display. The use, shape, number, location and the like of the opening may be decided in light of actual needs, and are not restricted by the present disclosure.

As an example, the opening accommodating the first interface 203 and the opening accommodating the second interface 204 may be located on the same side of the casing 201. However, the openings may be located on other parts of the casing (e.g., two opposite sides of the casing). The present disclosure is not intended to place any restrictions on the location.

The first interface 203 is connectable to a power supply so as to receive the first electric power. As an example of the first electric power, it may be AC power of 220V.

The second interface 204 is connectable to the TV so as to transmit the multimedia signal and the first electric power to the TV and receive the second electric power from the TV. As an example, the multimedia signal may be a multimedia signal input externally or a multimedia signal that is converted by the TV main board from a built-in signal (e.g., an audio signal, a video signal or a text) of the TV main board apparatus. Such a multimedia signal may be, for instance, a high definition multimedia interface (HDMI) signal.

As an example, the second electric power may be converted from the first electric power by the TV. For instance, it may be DC power obtained by performing an AC-DC conversion of AC power of 220V. The second electric power may serve to power the TV main board apparatus. The voltage of the second electric power may be set as the TV main board apparatus needs for power, such as 5V.

As an example, the first interface may have a terminal configured to transmit the first electric power, such as a live wire terminal and a neutral wire terminal.

As an example, a terminal configured to transmit the first electric power, a terminal configured to transmit the second electric power, and a terminal configured to transmit the multimedia signal may be integrated in the second interface 204. Due to such integrated configuration, only one line is needed between the TV main board apparatus and the TV, making it possible to supply electric power to both the TV main board apparatus and the TV and transmit the multimedia signal therebetween. As a result, the whole system looks simple and attractive and is easy to use and install.

As an example of the second interface 204, the terminal configured to transmit the second electric power and the terminal configured to transmit the multimedia signal are conductively connectable to the TV main board, and the terminal configured to transmit the first electric power is conductively connectable, via the interface connecting device 205, to a terminal of the first interface 203 that is configured to transmit the first electric power and is electrically isolated from the TV main board 202. That way, the first electric power does not pass through the TV main board, thereby avoiding interference with the main board's operation and even damage to the main board.

As an example, the first interface 203 may be a plug interface (also known as male connector), and the second interface 204 may be a socket interface (also known as a female connector). Consequently, after the first interface 203 connects to the first electric power, the second interface as the female connector would not have its conductive portions (e.g., its terminals) exposed outside, thus ensuring safety.

As an example, the terminals of the first interface 203 and those of the second interface 204 can be fixed at their respective seats, the seat of the first interface 203 can be fixedly connected to the casing 201. The seat of the second interface 204 can be fixedly connected to the casing 201 or to the TV main board 202.

As an example, the second interface may have an HDMI. The HDMI may have more than 19 pins, and for instance, preferably 29 or 30 pins. A part of the pins (e.g., 13 pins, or any other number as needed) may serve to transmit a high definitional multimedia signal, and another part of the pins (e.g., 6 pins, or any other number as needed) may serve to transmit the second electric power (e.g., DC power of 5V). Some of the pins may serve to transmit a control signal or any other desired signal.

The terminals of the second interface may be arranged in the form of an array of any profile in light of needs.

The second interface 204 may further have a live wire terminal and a neutral wire terminal that are configured to transmit the first electric power (e.g., electric power of 220V).

Besides, the location relationship between the HDMI and the live wire and neutral wire terminals, and the profile of the second interface may be decided by a person skilled in the art in light of actual needs. The present disclosure is not meant to place restrictions on them.

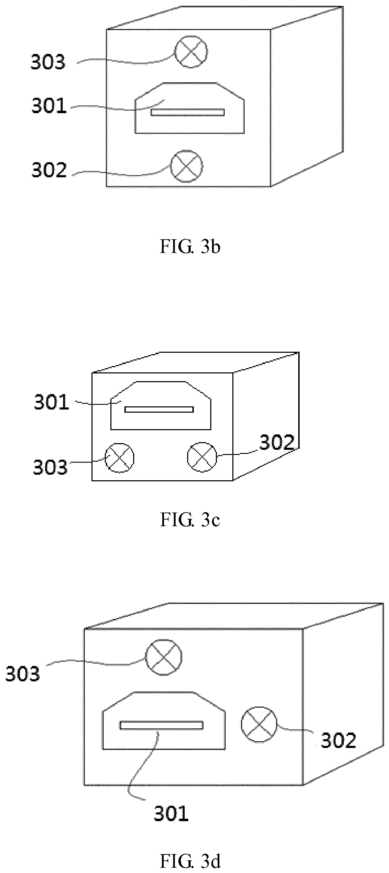

Figs. 3a-3d are schematic structural diagrams showing examples of the second interface 204. In Fig. 3a, the live wire terminal 302 and the neutral wire terminal 303 are respectively located besides the HDMI 301. In Fig. 3b, the live wire terminal 302 and the neutral wire terminal 303 are located above and below the HDMI 301. In Fig. 3c, the live wire terminal 302 and the neutral wire terminal 303 are located below (or above) the HDMI 301. In Fig. 3d, either of the live wire terminal 302 and the neutral wire terminal 303 is located above (or below) the HDMI 301, and the other is located to the left (or right) of the HDMI 301. Although not shown in the drawings, the live wire terminal 302 and the neutral wire terminal 303 may be both located to the left or right of the HDMI 301. It should be understood by a person skilled in the art that Figs. 3a-3d just give some examples of the second interface 204 and its specific configuration may be devised by a person skilled in the art in light of actual needs, provided that it is capable of transmitting a multimedia signal and the first electric power to the TV and receiving the second electric power from the TV.

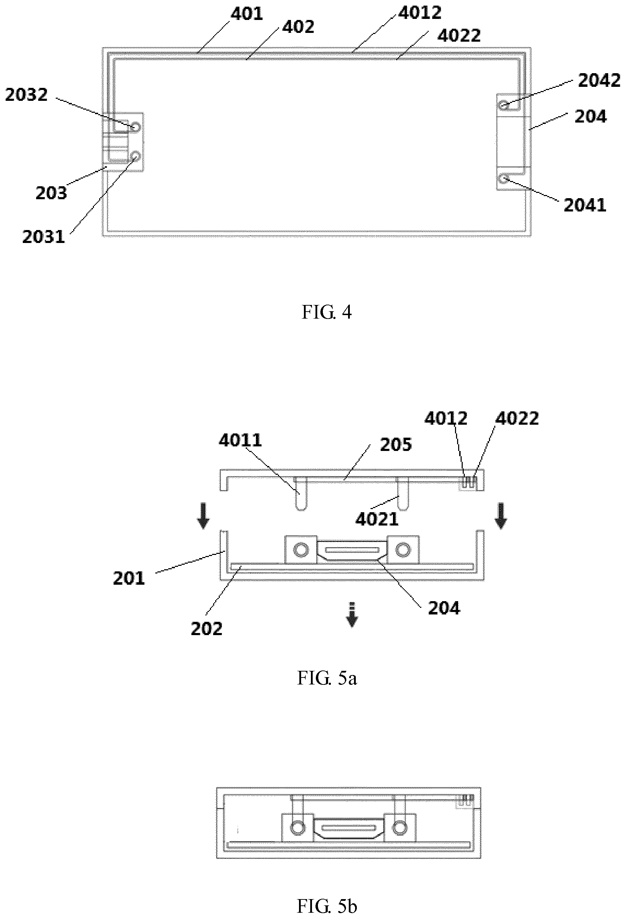

Figs. 4, 5a and 5b are schematic structural diagrams showing examples of an interface connecting device. Fig. 4 is a top view of the TV main board apparatus. As shown in Fig. 4, the interface connecting device can be a metal connection line in a sheet shape, which can comprise a live wire 401 and a neutral wire 402. One end of the live wire 401 can be connected to a live wire terminal 2031 of the first interface 203, and one end of the neutral wire 402 can be connected to a neutral wire terminal 2032 of the first interface 203. The other end of the live wire 401 can be connected to a live wire terminal 2041 of the second interface 204, and the other end of the neutral wire 402 can be connected to a neutral wire terminal 2042 of the second interface 204. Consequently, the first electric power is transmittable between the first interface 203 and the second interface 204.

Figs. 5a and 5b are side views as seen from the second interface. Fig. 5a is an exploded view, and Fig. 5b is an assembled view. In the example shown in Figs. 4, 5a and 5b, the interface connecting device 205 can be located on one side (e.g., a upper side) of the casing 201 that is opposite to another side (e.g., an lower side) of the casing where the TV main board 202 is located, and can be located along an edge of the one side. Such configuration allows the interface connecting device 205 to be far away from the TV main board, so the interface connecting device 205 does not interfere with signals in the TV main board. As an example of the live wire 401 and the neutral wire 402, the live wire 401 may comprise an end section 4011 and a connection section 4012, and the neutral wire 402 may comprise an end section 4021 and a connection section 4022. The end sections are conductively connected to corresponding terminals (e.g., the live wire terminal and neutral wire terminal) of the first and second interfaces. The connection sections are conductively connected to the end sections and can be located along an edge of one side of the casing 201 that is opposite to another side of the casing 201 where the TV main board 202 is located. At the edge, the connection section 4012 of the live wire 401 may be parallel to the connection section 4022 of the neutral wire 402.

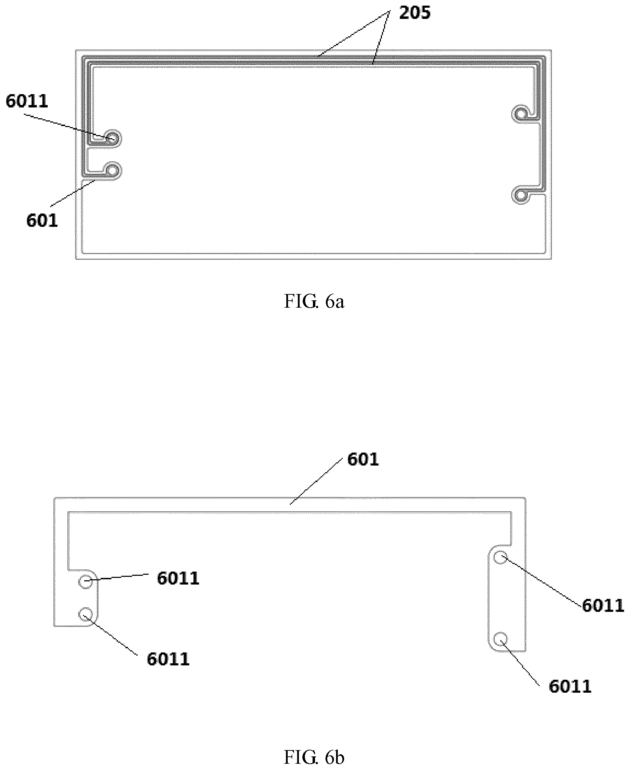

Figs. 6a and 6b are schematic structural diagrams of an exemplary insulating covering device. Fig. 6a is a view as seen from the interior of the casing towards a side (e.g., an upper side) of the casing where the interface connecting device is located. Fig. 6b is a schematic diagram showing an insulating covering device 601. As shown in Figs. 6a and 6b, the TV main board apparatus may further comprise an insulating covering device 601 that covers the interface connecting device 205. Thus, it makes the interface connecting device 205 unexposed and further separated from the main board apparatus and improves the safety of the TV main board apparatus. The insulating covering device may cover the interface connecting device in such a way that the interface connecting device is sealed up. The insulating covering device may be made of any proper insulating material such as plastic. The size and shape of the insulating covering device 601 may fit the interface connecting device 205. For example, it may be a cover plate capable of sealing up the interface connecting device exactly right. The insulating covering device 601 may have a hole 6011 that allows the interface connecting device to conductively connect to terminals of the first and second interfaces that are configured to transmit the first electric power.

### Example 2

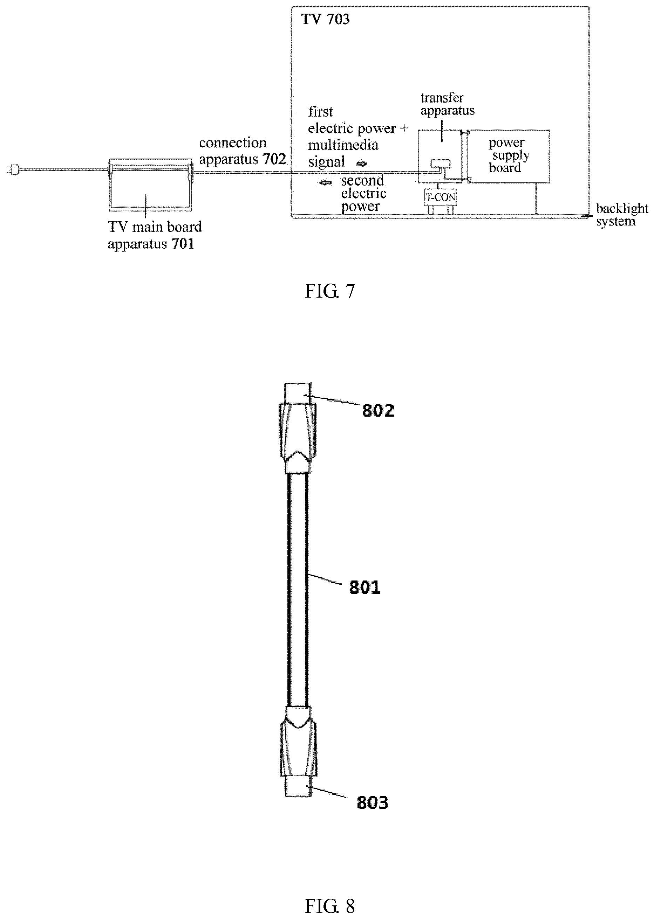

Fig. 7 is a schematic structural diagram showing a TV system according to an example of the present disclosure. As shown in Fig. 7, the TV system comprises: a TV main board apparatus 701 as described in Example 1, a connection apparatus 702, and a TV 703. The connection apparatus 702 connects the TV main board apparatus 701 to the TV 703.

Fig. 8 is a schematic structural diagram showing an exemplary connection apparatus. As shown in Fig. 8, the connection apparatus 800 comprises a connection line 801 capable of transmitting a multimedia signal and first electric power that are supplied by the TV main board apparatus to the TV and transmitting second electric power that is supplied by the TV to the TV main board apparatus. The connection apparatus 800 further comprises: a first connection section 802 located at one end of the connection line and connectable to the TV main board apparatus; and a second connection section 803 located at the other end of the connection line and connectable to the TV.

The connection apparatus exemplified as such integrates the transmission of a multimedia signal, the transmission of first electric power and the transmission of second electric power with each other. In appearance, only one connection line makes it possible to supply electric power to both a TV and a TV main board apparatus and transmit a multimedia signal. As a result, the whole system becomes less complicated, easier to use and install, and simple and attractive in appearance.

For more details of the first electric power, second electric power and multimedia signal, Example 1 could be referred to.

As an example, the first connection section 802 can be compatible with and connectable to the second interface 204 of the TV main board apparatus in Example 1. The second connection section 803 can be compatible with and connectable to the corresponding interface of the TV.

As an example, a terminal configured to transmit the first electric power, a terminal configured to transmit the second electric power, and a terminal configured to transmit the multimedia signal may be integrated in the first connection section 802 and second connection section 803 respectively. Correspondingly, the connection line 801 may comprise a connection line configured to transmit the first electric power, a connection line configured to transmit the second electric power, and a connection line configured to transmit the multimedia signal.

For instance, the first and second connection sections may be of configuration similar to that shown in Figs. 3a-3d. For more details of the first and second connection sections, the preceding parts about Figs. 3a-3d and the second interface could be referred to. The first connection section may be the same as or different from the second connection section in configuration. The present disclosure is not meant to place any restrictions on that.

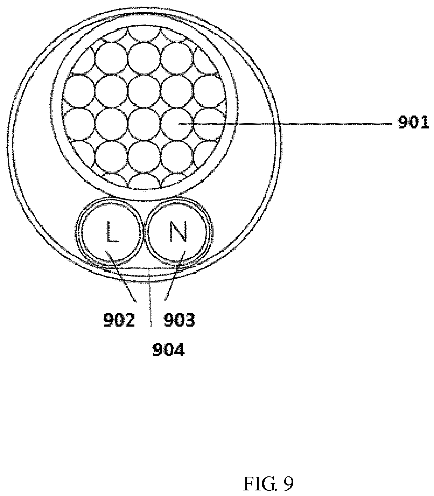

Fig. 9 is a schematic structural diagram showing the cross section of an exemplary connection line. In this example, the connection line may have: an HDMI transmission-line assembly 901 configured to transmit the multimedia signal and the second electric power; and a live wire 902 and a neutral wire 903 that are configured to transmit the first electric power. The live wire and neutral wire may be encased in a shielding section 904.

It should be understood by a person skilled in the art that Fig. 9 shows only one example of the connection line and its specific configuration may be devised by a person skilled in the art in light of actual needs, provided that it is capable of transmitting a multimedia signal, first electric power and second electric power.

Each of the transmission lines in the connection line may correspond to and conductively connect to each of the terminals of the first and second connection sections.

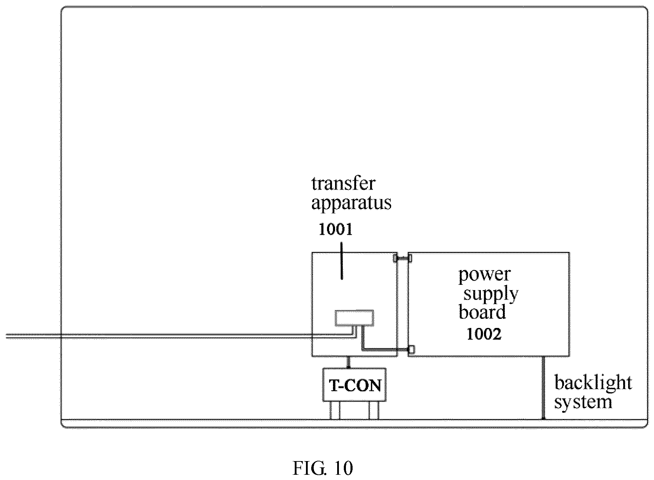

Fig. 10 is a schematic structural diagram showing an exemplary TV. As shown in Fig. 10, the TV comprises a transfer apparatus 1001 that receives the multimedia signal from the TV main board apparatus so as to allow the signal to be played and receives the first electric power from the TV main board apparatus so as to supply the first electric power to a power supply board 1002. The TV further comprises the power supply board 1002 that converts the first electric power into the second electric power, supplies the second electric power to the transfer apparatus 1001 so as to output the second electric power to the TV main board apparatus via the transfer apparatus, and converts the first electric power into third electric power for powering a backlight system of the TV.

The TV exemplified as such does not have a built-in TV main board. Instead, the TV main board apparatus is independent of the TV, so the TV does not need to have a large number of leading-out wires, and the TV main board can be repaired and replaced with ease. Besides, in this example, the transfer apparatus serves to supply electric power to both the TV and the TV main board apparatus and transmit a multimedia signal. That way, when the TV is to be used, it only needs to connect to the TV main board apparatus and does not need additional power cords. As a result, the whole system becomes less complicated, easier to use and install, and simple and attractive in appearance.

For more details of the first electric power, second electric power and multimedia signal, Example 1 could be referred to.

As an example of the power supply board 1002, it may convert the first electric power into fourth electric power for powering the transfer apparatus. For instance, the fourth electric power may be obtained by performing an AC-DC conversion of AC power of 220V (the first electric power). The voltage of the fourth electric power may be set as the transfer apparatus needs for power, such as 12V

As an example, the power supply board 1002 may include an AC-DC converter that converts the first electric power into the second or fourth electric power.

As an example, the backlight system of the TV may be a backlight bar. In this case, the third electric power may be a driving voltage for the backlight bar. The voltage of the third electric power may be decided by a person skilled in the art in light of actual application scenarios.

As an example, the TV may further comprise a time sequence controller (T-CON). The transfer apparatus may provide the T-CON with a multimedia signal (e.g., a video signal) so as to drive a display to display the multimedia signal. The transfer apparatus may comprise, for instance, a V-by-One (VBO, a signaling standard) interface, or a 51 Pin low voltage differential signaling (LVDS) interface, so as to supply a multimedia signal to the T-CON.

As an example, the transfer apparatus 1001 may further comprise an interface component. The interface component can be compatible with and connectable to the second connection section 803 of the above connection apparatus. A terminal configured to transmit the first electric power, a terminal configured to transmit the second electric power, and a terminal configured to transmit the multimedia signal may be integrated in the interface component. The interface component may be of configuration similar to that shown in Figs. 3a-3d. For more details of the interface component, the preceding parts about Figs. 3a-3d and the second interface could be referred to. It should be understood by a person skilled in the art that Figs. 3a-3d and the second interface illustrate only examples of the configuration of the interface component and its configuration may be devised in light of actual needs, provided that a terminal configured to transmit the first electric power, a terminal configured to transmit the second electric power, and a terminal configured to transmit the multimedia signal are integrated therein.

### Examples of applications

There is provided here a work process of an example of the present disclosure in an exemplary application scenario so that the present disclosure can be understood with ease. It should be understood by a person skilled in the art that the process is provided to help comprehension of the present disclosure and is not meant to limit the present disclosure in any way.

Take the TV system shown in Fig. 7 as an example. The first interface of the TV main board apparatus 701 can be connected to an AC power supply of 220V Electric power of 220V (the first electric power) provided by the power supply can be supplied to the TV 703 by the TV main board apparatus 701 via the connection apparatus 702. The transfer apparatus in the TV 703 receives the power of 220V and supplies it to the power supply board. The power supply board converts a part of the power into a driving voltage for the backlight bar, another part into DC power of 12V as the fourth electric power for powering the transfer apparatus, and still another part into DC power of 5V as the second electric power-which the transfer apparatus supplies to the TV main board apparatus 701 for powering. The powered TV main board apparatus 701 supplies the converted HDMI signal to the TV 703 via the connection apparatus 702. The powered transfer apparatus can supply the HDMI signal to another component such as the T-CON so as to play the multimedia signal.

The above description relates only to embodiments of the present disclosure. The protection scope of the present disclosure is not limited thereto and covers variants or replacements which a person skilled in the art can easily think of and that fall within the technical range of the present disclosure. The protection scope of the present disclosure is determined by the appended claims.

## Claims

1. A TV main board apparatus, comprising:
a casing having at least one opening;
a TV main board accommodated in the casing;
a first interface exposed outside the casing via the opening, wherein the first interface is capable of connecting to a power supply so as to receive first electric power;
a second interface exposed outside the casing via the opening, wherein the second interface is capable of connecting to a TV so as to transmit a multimedia signal from the TV main board and the first electric power to the TV and receive second electric power from the TV so as to supply the second electric power to the TV main board; and
an interface connecting device configured to connect the first interface to the second interface so as to transmit the first electric power therebetween.

2. The TV main board apparatus according to claim 1, wherein the interface connecting device is located along an edge of one side of the casing that is opposite to another side of the casing where the TV main board is located.

3. The TV main board apparatus according to claim 1, wherein the first interface is a plug interface, and the second interface is a socket interface.

4. The TV main board apparatus according to claim 1, wherein the second electric power is converted from the first electric power by the TV and serves to power the TV main board apparatus.

5. The TV main board apparatus according to claim 1, wherein a terminal configured to transmit the first electric power, a terminal configured to transmit the second electric power, and a terminal configured to transmit the multimedia signal are integrated in the second interface.

6. The TV main board apparatus according to claim 5, wherein the terminal configured to transmit the second electric power and the terminal configured to transmit the multimedia signal are conductively connected to the TV main board, and the terminal configured to transmit the first electric power is conductively connected, via the interface connecting device, to a terminal of the first interface that is configured to transmit the first electric power, and is electrically isolated from the TV main board.

7. The TV main board apparatus according to claim 1, wherein the second interface comprises a high definition multimedia interface (HDMI), and a part of pins of the HDMI are configured to transmit a high definition multimedia signal and another part of the pins are configured to transmit the second electric power.

8. The TV main board apparatus according to claim 1, further comprising an insulating covering device configured to cover the interface connecting device.

9. A TV system, comprising:
the TV main board apparatus according to any one of claims 1-8;
a TV; and
a connection apparatus configured to connect the TV main board apparatus to the TV.

10. The TV system according to claim 9, wherein the connection apparatus comprises:
a connection line capable of transmitting the multimedia signal and the first electric power that are supplied by the TV main board apparatus to the TV and transmitting the second electric power that is supplied by the TV to the TV main board apparatus;
a first connection section located at one end of the connection line and capable of connecting to the second interface of the TV main board apparatus; and
a second connection section located at the other end of the connection line and capable of connecting to the TV.

11. The TV system according to claim 10, wherein a terminal configured to transmit the first electric power, a terminal configured to transmit the second electric power, and a terminal configured to transmit the multimedia signal are integrated in the first connection section and the second connection section respectively.

12. The TV system according to claim 10, wherein the first connection section and the second connection section respectively comprise a high definition multimedia interface (HDMI), and a part of pins of the HDMI are configured to transmit a high definition multimedia signal and another part of the pins are configured to transmit the second electric power.

13. The TV system according to claim 9, wherein the TV comprises:
a transfer apparatus configured to receive the multimedia signal from the TV main board apparatus so as to allow the multimedia signal to be played, and receive the first electric power from the TV main board apparatus so as to supply the first electric power to a power supply board; and
the power supply board configured to convert the first electric power into the second electric power, supply the second electric power to the transfer apparatus so as to output the second electric power to the TV main board apparatus via the transfer apparatus, and convert the first electric power into third electric power for powering a backlight system of the TV.

14. The TV system according to claim 13, wherein the power supply board is configured to convert the first electric power into fourth electric power for powering the transfer apparatus.

15. The TV system according to claim 13, wherein the TV further comprises a timing controller (T-CON), and the transfer apparatus is configured to supply the multimedia signal to the T-CON.

16. The TV system according to claim 13, wherein the transfer apparatus comprises an interface component capable of connecting to the connection apparatus and in which a terminal configured to transmit the first electric power, a terminal configured to transmit the second electric power, and a terminal configured to transmit the multimedia signal are integrated.

17. The TV system according to claim 16, wherein the interface component comprises a high definition multimedia interface (HDMI), and a part of the pins of the HDMI are configured to transmit a high definition multimedia signal and another part of the pins are configured to transmit the second electric power.
